(19) **Europäisches Patentamt / European Patent Office / Office européen des brevets**

(11) **EP 4 411 069 A1**

(12) # EUROPEAN PATENT APPLICATION
published in accordance with Art. 153(4) EPC

(43) Date of publication:
**07.08.2024 Bulletin 2024/32**

(21) Application number: **22875653.2**

(22) Date of filing: **23.08.2022**

(51) International Patent Classification (IPC):
**E01D 22/00** (2006.01) **G06T 7/00** (2017.01)

(52) Cooperative Patent Classification (CPC):
**E01D 22/00; G06T 7/00**

(86) International application number:
**PCT/JP2022/031749**

(87) International publication number:
**WO 2023/053781 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 JP 2021158213**

(71) Applicant: **FUJIFILM Corporation Tokyo 106-8620 (JP)**

(72) Inventor: **HORITA, Shuhei Tokyo 106-8620 (JP)**

(74) Representative: **Meissner Bolte Partnerschaft mbB Patentanwälte Rechtsanwälte Postfach 86 06 24 81633 München (DE)**

(54) **IMAGE PROCESSING DEVICE, METHOD, AND PROGRAM**

(57)    Provided are an image processing apparatus, a method, and a program capable of easily classifying and organizing images obtained by imaging a structure.

An image processing apparatus (10, 50A, 200) includes a member determination unit (120, 520, 220) that determines a member appearing in a structure image to be determined, which is obtained by imaging a structure, and an identification information assignment unit (122, 522, 222) that assigns member identification information indicating the member determined by the member determination unit to the structure image to be determined.

FIG. 1

**Description**

**BACKGROUND OF THE INVENTION**

1. Field of the Invention

The present invention relates to an image processing apparatus, method, and program, and particularly relates to an image processing apparatus, method, and program for processing an image obtained by capturing a structure such as a bridge.

2. Description of the Related Art

Structures such as a bridge, a road, a tunnel, and a dam are developed to serve as a basis of industry and life, and play an important role in supporting people's comfortable lives. Such structures are constructed using, for example, concrete, steel frames, or the like, but because the structures are used by people for a long period of time, the structures deteriorate with the passage of time.

Therefore, it is necessary to perform regular inspections of such structures to find a location where damage and deterioration have occurred, and to perform appropriate maintenance management such as replacement or repair of members.

As a technology for inspecting such structures, WO2015/163106A discloses an inspection system that images a girder bridge of a bridge by using a hovering camera configured to automatically fly in accordance with preset flight information.

According to WO2015/163106A, by automatically flying the hovering camera and imaging the girder bridge of the bridge, it is possible to perform inspection work of the bridge at low cost without affecting traffic.

**SUMMARY OF THE INVENTION**

In a case of imaging a structure such as a bridge and inspecting it as the inspection system described in WO2015/163106A, a large number of images are captured each time inspection is performed.

Then, inspection work such as various diagnoses using the image of the structure and creation of a report on inspection and diagnosis results is often performed for each member constituting the structure.

Therefore, in a case where the inspection work is performed, a large number of images obtained by imaging the structure are classified and organized for each member constituting the structure.

As a method of classifying and organizing such a large number of images, for example, an inspection person may visually confirm the images and classify and organize images for each member constituting the structure.

In addition, it is considered that a correspondence relationship between a design data or a three-dimensional model (hereinafter, referred to as a 3D model) including information relating to a structure of the imaging target structure, and an imaging position of an image is obtained, and the images are classified and organized using the correspondence relationship.

However, there is a problem that it takes time and effort to classify and organize a large amount of images with the above method.

In addition, there is a probability that the images may not be classified and organized properly due to a human error in the visual confirmation by the inspection person.

The present invention has been made in view of such circumstances, and an object of the present invention is to provide an image processing apparatus, a method, and a program capable of easily classifying and organizing images obtained by imaging a structure.

In order to solve the above problems, there is provided an image processing apparatus according to a first aspect of the present invention comprising: a member determination unit that determines a member appearing in a structure image to be determined, which is obtained by imaging a structure; and an identification information assignment unit that assigns member identification information indicating the member determined by the member determination unit to the structure image to be determined.

According to an image processing apparatus according to a second aspect of the present invention, in the first aspect, the member determination unit performs image recognition of the structure image to be determined, and determines the member appearing in the structure image to be determined based on a result of the image recognition.

According to an image processing apparatus according to a third aspect of the present invention, in the second aspect, the member determination unit includes member determination AI that has been trained for determination of a member constituting the structure, and determines the member appearing in the structure image to be determined using the member determination AI.

According to an image processing apparatus according to a fourth aspect of the present invention, in the second aspect, the member determination unit detects a member identifier assigned to each member constituting the structure from the structure image to be determined, and determines the member appearing in the structure image to be determined using the member identifier.

According to an image processing apparatus according to a fifth aspect of the present invention, in the second aspect, the member determination unit performs image recognition of an assignment-completed structure image to which the member identification information has already been assigned and the structure image to be determined, and determines the member appearing in the structure image to be determined based on a result of the image recognition.

According to an image processing apparatus according to a sixth aspect of the present invention, in the second aspect, the member determination unit acquires a structure model that includes information indicating a structure of the structure and that is associated with the member identification information of the structure and a reference structure image that is associated with the structure model, performs image recognition of the reference structure image and the structure image to be determined and searches for the reference structure image in which the same member as the member appearing in the structure image to be determined appears based on a result of the image recognition, and determines the member appearing in the structure image to be determined from a correspondence relationship between the reference structure image in which the same member as the member appearing in the structure image to be determined appears and the structure model.

According to an image processing apparatus according to a seventh aspect of the present invention, in the first aspect, the member determination unit acquires reference information for determining the member appearing in the structure image to be determined, and determines the member appearing in the structure image to be determined based on the reference information.

According to an image processing apparatus according to an eighth aspect of the present invention, in the seventh aspect, the reference information includes a structure model including information indicating a structure of the structure, and information relating to an imaging situation including information on an imaging position and an imaging direction in a case of imaging of the structure image to be determined, and the member determination unit determines the member appearing in the structure image to be determined based on a correspondence relationship between the structure model and the information relating to the imaging situation.

According to an image processing apparatus according to a ninth aspect of the present invention, in the seventh aspect, the reference information includes information relating to an imaging plan of the structure including information indicating a correspondence relationship between an imaging order of the structure image to be determined and a member constituting the structure, and the member determination unit determines the member appearing in the structure image to be determined based on a correspondence relationship between the information relating to the imaging plan and the structure image to be determined.

According to an image processing apparatus according to a tenth aspect of the present invention, in the ninth aspect, the information relating to the imaging plan includes information indicating an imaging position and an imaging direction in a case of imaging the structure, and the image processing apparatus further comprises: an imaging unit for imaging the structure; a position measurement unit that measures an imaging position and an imaging direction of the imaging unit; and a control unit that performs control such that the imaging position and the imaging direction of the imaging unit match the information indicating the imaging position and the imaging direction included in the information relating to the imaging plan.

According to an image processing apparatus according to an eleventh aspect of the present invention, in any of the first to tenth aspects, in a case where a plurality of members appear in the structure image to be determined, the identification information assignment unit assigns member identification information relating to the plurality of members to the structure image to be determined.

According to an image processing apparatus according to a twelfth aspect of the present invention, in any of the first to eleventh aspects, the image processing apparatus further comprises a damage information assignment unit that detects damage from the structure image and that assigns information relating to the damage to the structure image.

According to an image processing apparatus according to a thirteenth aspect of the present invention, in any of the first to twelfth aspects, the image processing apparatus further comprises an assignment information editing unit for editing assignment information assigned to the structure image.

According to an image processing apparatus according to a fourteenth aspect of the present invention, in any of the first to thirteenth aspects, the image processing apparatus further comprises a structure image search unit that searches for the structure image based on assignment information assigned to the structure image.

There is provided an image processing method according to a fifteenth aspect of the present invention comprising: a step of determining a member appearing in a structure image to be determined, which is obtained by imaging a structure; and a step of assigning member identification information indicating a member which is determined as the member appearing in the structure image to be determined to the structure image to be determined.

There is provided an image processing program according to a sixteenth aspect of the present invention for causing a computer to realize: a member determination function of determining a member appearing in a structure image to be determined, which is obtained by imaging a structure; and an identification information assignment function of assigning member identification information indicating the member determined by the member determination function to the structure image to be determined.

It should be noted that each of the above-described aspects can also be realized as an image processing apparatus in which a processor of a computer realizes the function of each of the above-described units.

That is, the processor of the image processing apparatus is capable of determining a member appearing in a structure image to be determined, which is obtained by imaging a structure, and assigning member identification information indicating the determined member to the structure image to be determined.

According to the present invention, it is possible to easily classify and organize structure images by determining a member appearing in the structure image and assigning member identification information to the structure image.

**BRIEF DESCRIPTION OF THE DRAWINGS**

Fig. 1 is a block diagram illustrating an image processing apparatus according to a first embodiment of the present invention.

Fig. 2 is a diagram for explaining an image processing function according to the first embodiment of the present invention.

Fig. 3 is a flowchart illustrating an image processing method according to the first embodiment of the present invention.

Fig. 4 is a flowchart illustrating a member determination step (Step S12 in Fig. 3) according to the first embodiment of the present invention.

Fig. 5 is a diagram for explaining an image processing function according to a second embodiment of the present invention.

Fig. 6 is a flowchart illustrating a member determination step (Step S12 in Fig. 3) according to the second embodiment of the present invention.

Fig. 7 is a diagram for explaining an image processing function according to a third embodiment of the present invention.

Fig. 8 is a perspective view illustrating a specific example of a structure model.

Fig. 9 is an enlarged plan view of a region IX in Fig. 8 as viewed from below.

Fig. 10 is an enlarged perspective view illustrating a region X in Fig. 8.

Fig. 11 is a diagram for explaining member determination using a structure image associated with the structure in Fig. 10.

Fig. 12 is a flowchart illustrating a member determination step (Step S12 in Fig. 3) according to the third embodiment of the present invention.

Fig. 13 is a diagram for explaining an image processing function according to a fourth embodiment of the present invention.

Fig. 14 is a diagram for explaining member determination using the structure model and information relating to an imaging situation.

Fig. 15 is a flowchart illustrating a member determination step (Step S12 in Fig. 3) according to the fourth embodiment of the present invention.

Fig. 16 is a diagram for explaining an image processing function according to a fifth embodiment of the present invention.

Fig. 17 is a diagram for explaining member determination using information relating to the structure model and an imaging plan.

Fig. 18 is a flowchart illustrating a member determination step (Step S12 in Fig. 3) according to the fifth embodiment of the present invention.

Fig. 19 is a block diagram illustrating an image processing function according to an additional embodiment.

Fig. 20 is a block diagram illustrating an imaging apparatus having an image processing function according to Modification Example 1.

Fig. 21 is a block diagram illustrating a cloud server having an image processing function according to Modification Example 2.

**DESCRIPTION OF THE PREFERRED EMBODIMENTS**

Hereinafter, preferred embodiments of an image processing apparatus, a method, and a program according to the present invention will be described with reference to the accompanying drawings.

[First Embodiment]

(Image Processing Apparatus)

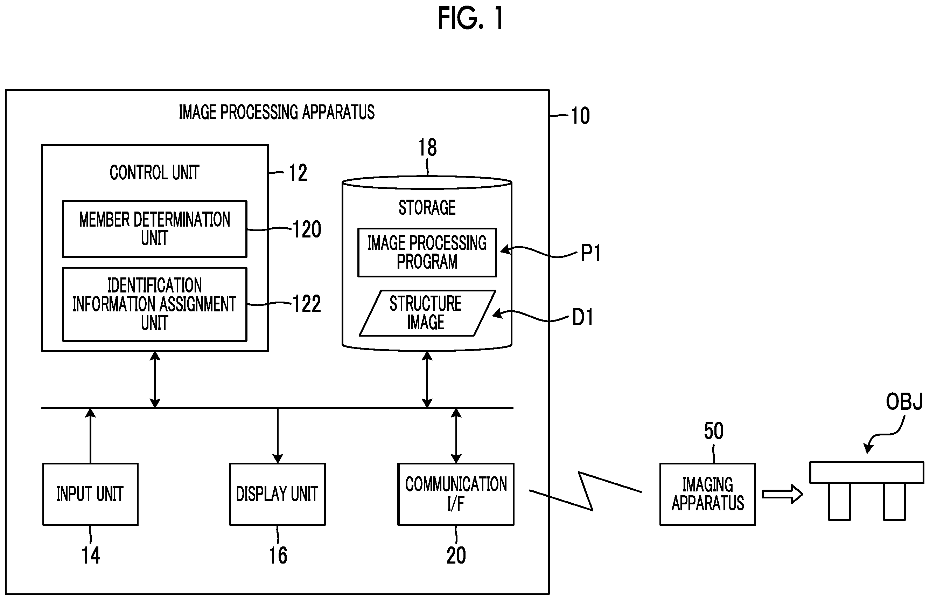

Fig. 1 is a block diagram illustrating an image processing apparatus according to a first embodiment of the present invention.

An image processing apparatus 10 according to the present embodiment is an apparatus for acquiring a structure image D1 obtained by imaging each part of a structure OBJ to be inspected from an imaging apparatus 50, and for classifying and organizing the structure image D1.

The imaging apparatus 50 comprises a camera (for example, a charge coupled device (CCD) camera or an infrared camera) for capturing an image of each part of the structure OBJ to be inspected. The imaging apparatus 50 may, for example, be equipped with a camera on a moving object such as an unmanned aerial vehicle, such a multicopter or drone, a vehicle or a robot, and be able to capture images while moving around the structure OBJ to be inspected.

As illustrated in Fig. 1, the image processing apparatus 10 according to the present embodiment comprises a control unit 12, an input unit 14, a display unit 16, a storage 18, and a communication interface (communication I/F: interface) 20. The image processing apparatus 10 may be, for example, a general-purpose computer such as a personal computer or a workstation, or a tablet terminal.

The control unit 12 includes a processor (for example, a central processing unit (CPU) or a graphics processing unit (GPU)) that controls an operation of each unit of the image processing apparatus 10. The control unit 12 can transmit and receive a control signal and data to and from each unit of the image processing apparatus 10 via a bus. The control unit 12 receives an instruction input from an operator via the input unit 14, transmits a control signal corresponding to the instruction input to each unit of the image processing apparatus 10 via the bus, and controls the operation of each unit.

The control unit 12 includes a random access memory (RAM) used as a work region for various calculations, and a video random access memory (VRAM) used as a region for temporarily storing image data output to the display unit 16.

The input unit 14 is an input device that receives the instruction input from the operator, and includes a keyboard for inputting characters and the like, and a pointing device (for example, a mouse, a trackball, or the like) for operating a graphical user interface (GUI) such as a pointer and an icon displayed on the display unit 16. As the input unit 14, a touch panel may be provided on a surface of the display unit 16 instead of or in addition to the keyboard and the pointing device.

The display unit 16 is a device for displaying an image. As the display unit 16, for example, a liquid crystal monitor can be used.

The storage 18 stores a control program, an image processing program P1, and the like for various calculations, and various kinds of data including the structure image D1 (for example, a visible light image, an infrared image, or the like) obtained by imaging the structure OBJ to be inspected. As the storage 18, for example, a device including a magnetic disk such as a hard disk drive (HDD), a device including a flash memory such as an embedded multi media card (eMMC) or a solid state drive (SSD) can be used.

The communication I/F 20 is a means for performing communication with an external device including the imaging apparatus 50 via a network. As a method of transmitting and receiving data between the image processing apparatus 10 and the external device, wired communication or wireless communication (for example, a local area network (LAN), a wide area network (WAN), Internet connection, or the like) can be used.

The image processing apparatus 10 can receive an input of the structure image D1 from the imaging apparatus 50 via the communication I/F 20. A method of inputting the structure image D1 to the image processing apparatus 10 is not limited to communication via the network. For example, a universal serial bus (USB) cable, Bluetooth (registered trademark), infrared communication, or the like may be used or the structure image D1 may be stored in a recording medium (for example, a USB memory) that is attachable to and detachable from the image processing apparatus 10 and that can be read, and an input of the structure image D1 may be received via the recording medium.

(Image Processing Function)

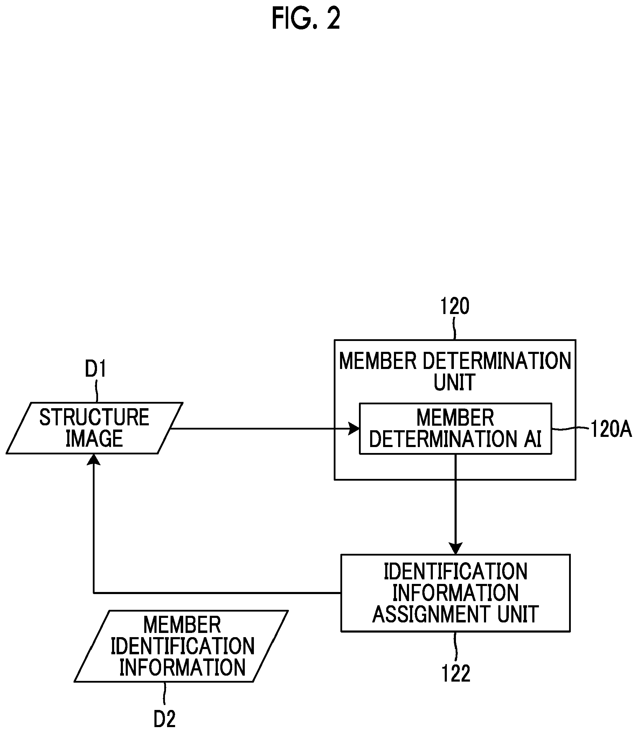

Next, image processing functions (member determination function and identification information assignment function) of the image processing apparatus 10 will be described with reference to Fig. 2. Fig. 2 is a diagram for explaining an image processing function.

A processor of the control unit 12 can realize the functions of a member determination unit 120 and an identification information assignment unit 122 by reading out an image processing program P1 from the storage 18 and executing the image processing program P1.

As illustrated in Fig. 2, the member determination unit 120 comprises member determination AI 120A (artificial intelligence). The member determination unit 120 performs image recognition or image analysis of the structure image D1 using the member determination AI 120A to determine a member constituting the structure OBJ appearing in the structure image D1.

Here, the member determination AI 120A is, for example, one (for example, a classifier) created by supervised learning for learning a relationship between input and output data using teacher data using teacher data having an image of a part of the structure OBJ such as a bridge as an input and a name of the member thereof as an output. The learning algorithm of the member determination AI 120A is not limited to the supervised learning, and may be unsupervised learning.

In addition, the image used for training the member determination AI 120A does not need to be an image of the same structure OBJ as the inspection target. As an image used for training the member determination AI 120A, for example, an image of a similar or the same kind of structure OBJ or an image created using design data (for example, a three-dimensional model) of the structure OBJ can be used.

The identification information assignment unit 122 acquires the determination result of the member appearing in the structure image D1 from the member determination unit 120, and assigns member identification information D2 to the structure image D1.

The member identification information D2 includes, for example, a type of a member constituting the structure OBJ (hereinafter, referred to as a member type) and an identifier for specifying a member in the structure OBJ (hereinafter, referred to as a member identification (ID)).

The member type is for classifying members constituting the structure OBJ based on a shape, a function, a material, a dimension, or the like thereof. For example, in a case of the bridge, the member type is a main girder, a cross beam, a bridge pier, a deck slab, or the like.

The member ID is an identifier for specifying which part a member constituting the structure OBJ is used for. The member IDs may be defined for one of the plurality of main girders used at the position A, for example, as a main girder A-1, or may be defined by specific position coordinates (for example, the position coordinates of the centroid or the position coordinates of the end parts in design).

The structure OBJ may be configured by combining a plurality of members of the same type. Therefore, it is possible to specify the types and the arrangements of the members appearing in the structure image D1 by using the member identification information D2 in which the member types and the member IDs are combined. In the case where the member ID includes information on the type and the arrangement of the member as in the main girder A-1 exemplified above, only the member ID may be used as the member identification information D2.

For example, in a case where the structure image D1 is an exchangeable image file format (Exif) file, the member identification information D2 can be stored in Exif information. Specifically, the member identification information D2 can be stored in association with, for example, a tag relating to information of operators such as a MakerNote, which is a tag for a maker to fill individual information and use the information independently or a UserComment, in the Exif information. The member identification information D2 can be stored in the Exif file by adding its own application marker segment (APPn), for example.

(Image Processing Method)

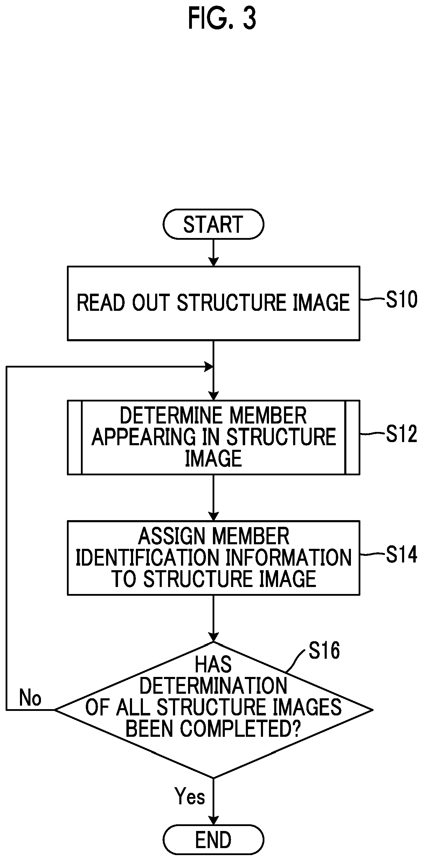

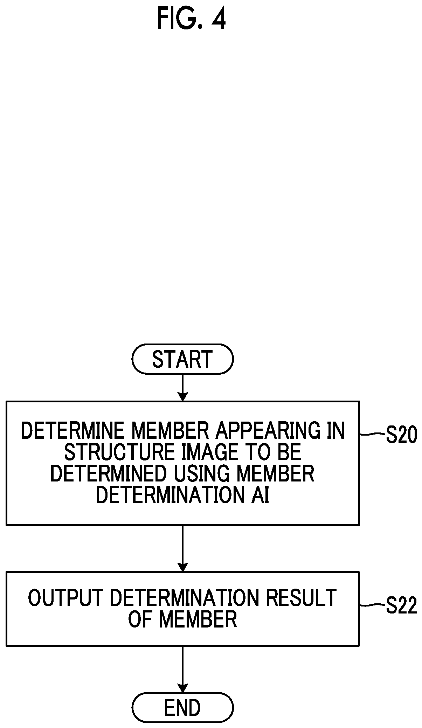

Next, the image processing method according to the present embodiment will be described with reference to Figs. 3 and 4. Fig. 3 is a flowchart illustrating an image processing method according to the first embodiment of the present invention.

First, the control unit 12 reads out the structure image D1 acquired from the imaging apparatus 50 from the storage 18 (Step S10).

Next, the member determination unit 120 performs image recognition of the structure image D1, which is read in Step S10, to be determined, and determines the member constituting the structure OBJ appearing in the structure image D1 (Step S12).

In Step S12, first, as illustrated in Fig. 4, the member determination unit 120 performs image recognition of the structure image D1 using the member determination AI 120A, and determines the member constituting the structure OBJ appearing in the structure image D1 (Step S20). Then, the member determination unit 120 outputs the determination result of the member to the identification information assignment unit 122 (Step S22).

Next, the identification information assignment unit 122 acquires the determination result of the member appearing in the structure image D1 from the member determination unit 120, and assigns member identification information to the structure image D1 (Step S14).

Then, Steps S12 to S14 are repeatedly executed until the determination of all structure images D1 is completed (Step S16).

According to the present embodiment, by performing image recognition of the structure image D1 using the member determination AI 120A, the member identification information D2 can be assigned to the structure image D1. Accordingly, it is possible to easily classify and organize the structure images D1.

In the present embodiment, the member identification information D2 is stored in data (Exif information) of the structure image D1, but the present invention is not limited to this. For example, without storing the member identification information in the data of the structure image D1, the member identification information D2 may be displayable in a case where the structure image D1 is browsed using the browsing application by storing the member identification information in the browsing application of the structure image D1.

In addition, the structure image D1 and the member identification information D2 need not be in one-to-one correspondence. That is, in a case where a plurality of members are detected from the structure image D1, the member identification information D2 relating to the plurality of members may be stored in the structure image D1.

The member identification information D2 may be divided into main members and non-main members. Here, for example, the positions in the structure image D1 or the areas occupied in the structure image D1 can be used as a determination criterion for determining whether or not the member is a main member.

Specifically, a member appearing at a position closest to the center of the field of view of the structure image D1 or a member occupying the maximum area in the structure image D1 may be set as the main member. In addition, a member appearing at an end part of the field of view of the structure image D1 or a member occupying a small area in the structure image D1 (for example, a member occupying 1% to 5% or less of the area of the structure image D1) may be a non-main member or may not be included in the member identification information D2.

The classification and organization of the structure image D1 can be facilitated by specifying the main member in the member identification information D2.

(Modification Example of First Embodiment)

In the present embodiment, the image recognition of the structure image D1 is performed by using the member determination AI 120A, but the present invention is not limited to this. For example, it is possible to determine members by using the member identifier (member identification mark, for example, a one-dimensional code, a two-dimensional code or a quick response (QR) code (registered trademark)) defined for each member of the structure OBJ.

Specifically, a member identification mark defined for each member of the structure OBJ is attached to each member of the structure OBJ.

In addition, the storage 18 stores a look-up table illustrating a correspondence relationship between the member identification mark and the member.

Then, by detecting the member identification mark from the structure image D1 using image recognition by the member determination unit 120, it is possible to determine the member.

[Second Embodiment]

Next, a second embodiment of the present invention will be described. In the following description, a description of the same configuration as that of the above-described embodiment will be omitted, and a part related to the member determination in the image processing function and the image processing method will be described.

(Image Processing Function)

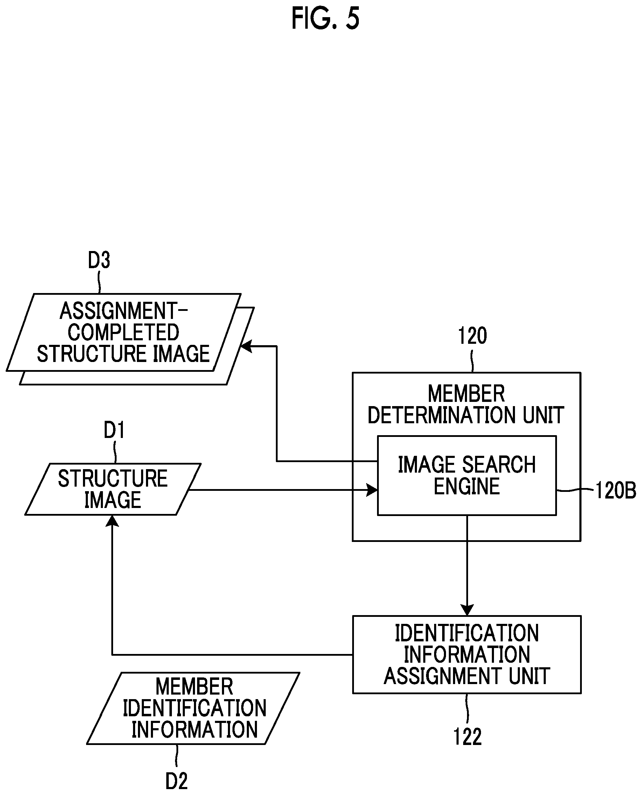

Fig. 5 is a diagram for explaining an image processing function according to the second embodiment of the present invention.

The member determination unit 120 according to the present embodiment can refer to an assignment-completed structure image D3 to which the member identification information D2 has already been assigned as the reference information. Then, the member determination unit 120 compares (matches) the structure image D1 to be determined with the assignment-completed structure image D3 to determine a member constituting the structure OBJ appearing in the structure image D1.

The assignment-completed structure image D3 may be stored in the storage 18 of the image processing apparatus 10 or may be stored in an external storage (for example, a cloud storage) accessible by the image processing apparatus 10.

As illustrated in Fig. 5, the member determination unit 120 comprises an image search engine 120B. The member determination unit 120 performs image recognition of the structure image D1 to be determined using the image search engine 120B, and searches for an image in which the same member appears from the assignment-completed structure image D3.

Specifically, the image search engine 120B extracts feature points from the structure image D1 to be determined, performs matching with the feature points extracted from each image of the assignment-completed structure image D3, and searches for an image in which the same member appears from the structure image D3. Then, the member determination unit 120 reads out the member identification information D2 of the image searched from the assignment-completed structure image D3 to determine the member constituting the structure OBJ appearing in the structure image D1.

As the image search engine 120B, a similar image search engine using machine learning or deep learning can be used.

The identification information assignment unit 122 acquires the determination result of the member appearing in the structure image D1 from the member determination unit 120, and assigns member identification information D2 to the structure image D1.

(Image Processing Method)

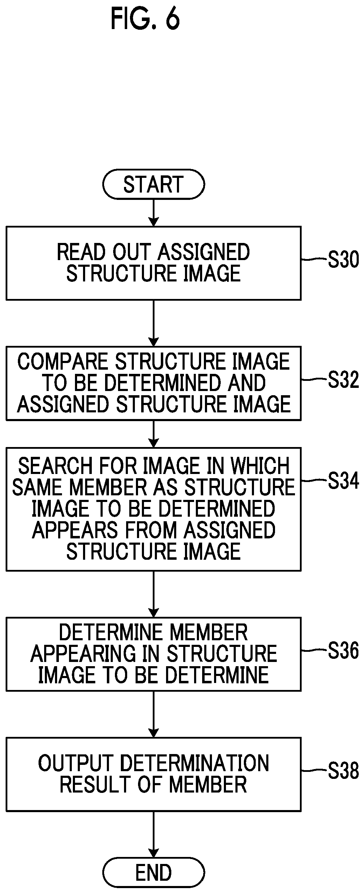

Fig. 6 is a flowchart illustrating a member determination step (Step S12 in Fig. 3) according to the second embodiment of the present invention.

First, the control unit 12 reads out the assignment-completed structure image D3 from the storage 18 or the external storage (Step S30). Here, the assignment-completed structure image D3 may be an image obtained by imaging the structure OBJ to be inspected, or may be an image of a structure of the same type as or similar to the structure OBJ to be inspected.

Next, the member determination unit 120 performs image recognition of the structure image D1 to be determined using the image search engine 120B, and compares the structure image D1 with the assignment-completed structure image D3 (Step S32). Then, the member determination unit 120 searches for an image in which the same member as the structure image D1 appears from the assignment-completed structure image D3 (Step S34).

Next, the member determination unit 120 reads out the member identification information D2 of the image searched from the assignment-completed structure image D3 to determine the member constituting the structure OBJ appearing in the structure image D1 (Step S36).

Then, the member determination unit 120 outputs the determination result of the member to the identification information assignment unit 122 (Step S38). Accordingly, the member identification information can be assigned to the structure image D1 (Step S14 in Fig. 3).

According to the present embodiment, the member identification information D2 can be assigned to the structure image D1 by referring to the assignment-completed structure image D3 to which the member identification information D2 has already been assigned. Accordingly, it is possible to easily classify and organize the structure images D1.

[Third Embodiment]

Next, a third embodiment of the present invention will be described. In the following description, a description of the same configuration as that of the above-described embodiment will be omitted, and a part related to the member determination in the image processing function and the image processing method will be described.

(Image Processing Function)

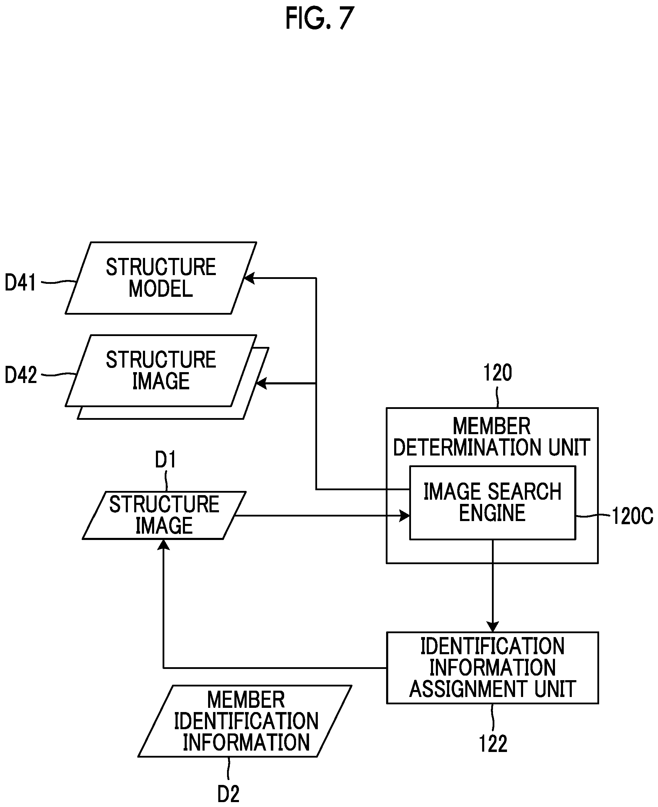

Fig. 7 is a diagram for explaining an image processing function according to the third embodiment of the present invention.

The member determination unit 120 according to the present embodiment comprises an image search engine 120C. The member determination unit 120 can refer to a structure model D41 to which the member identification information D2 is assigned and a reference structure image D42 associated with the structure model D41 as the reference information. The member determination unit 120 determines the member constituting the structure OBJ appearing in the structure image D1 by referring to the structure image D1 to be determined, the structure model D41, and the reference structure image D42 using the image search engine 120C.

Here, the structure model D41 is data including information relating to the shape and the structure of the structure OBJ to be inspected, and is, for example, a three-dimensional model including information relating to the three-dimensional shape of the structure OBJ to be inspected. The structure model D41 may be a design data of the structure OBJ to be inspected, or may be an actual measurement data measured in advance. For example, computer-aided design (CAD) data or three-dimensional CAD data can be used as the structure model D41. In addition, in a case where the actual measurement data is used as the structure model D41, for example, point cloud data obtained by restoring the three-dimensional shape from a multi-viewpoint picture of the structure OBJ using a structure from motion (SfM) technology can also be used.

In the structure model D41, the member identification information D2 is assigned for each member constituting the structure OBJ. The member identification information D2 is stored in the structure model D41 in association with the coordinates of the CAD data or the point cloud of the point cloud data.

The reference structure image D42 is an image obtained by imaging the structure OBJ, and is stored in association with the position coordinates of the structure OBJ in the structure model D41.

The structure model D41 and the reference structure image D42 may be stored in the storage 18 of the image processing apparatus 10 or may be stored in an external storage (for example, a cloud storage) accessible by the image processing apparatus 10.

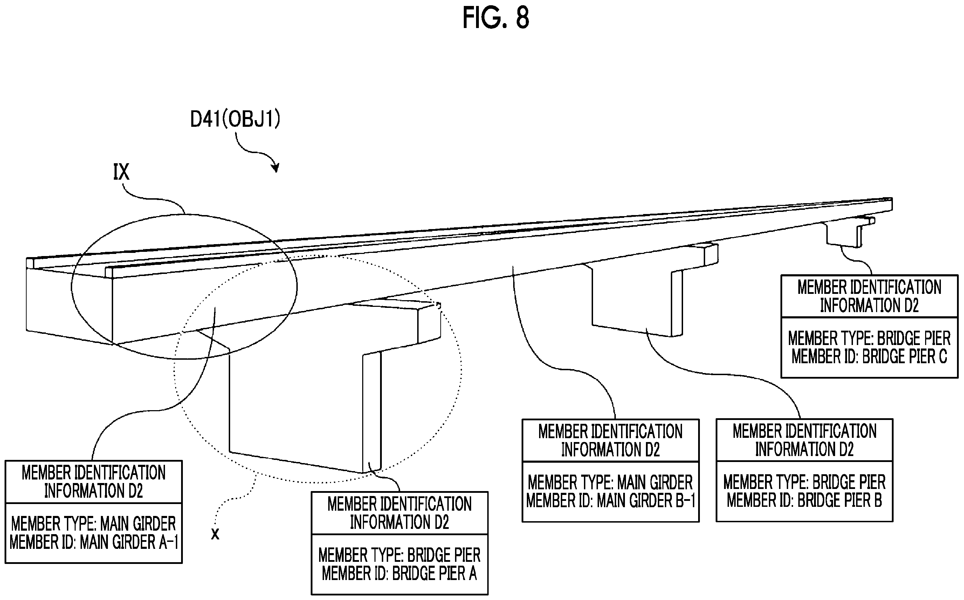

Here, specific examples of the structure model D41 and the reference structure image D42 will be described with reference to Figs. 8 to 11.

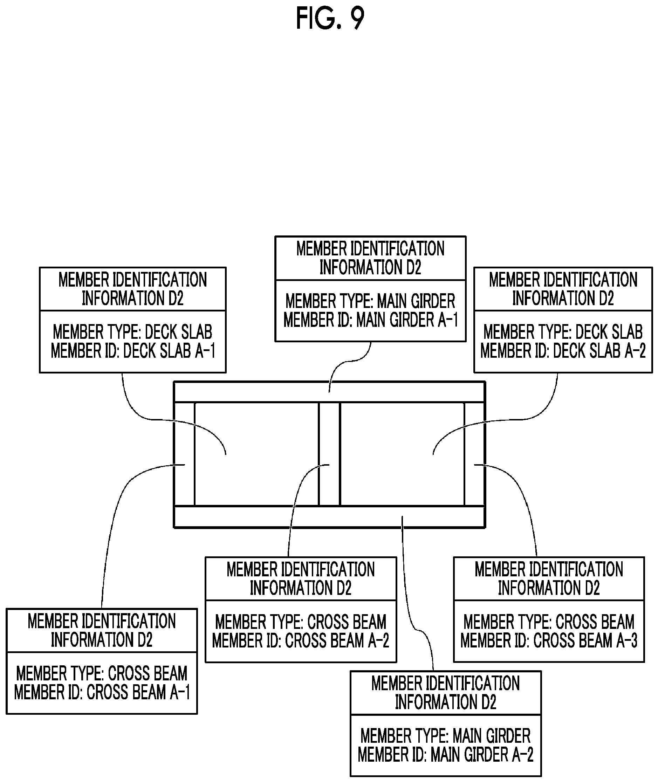

Fig. 8 is a perspective view illustrating a specific example of the structure model, and Fig. 9 is an enlarged plan view of a region IX in Fig. 8 as viewed from below. Figs. 8 and 9 illustrate a three-dimensional model D41 (OBJ1) of a bridge OBJ1 as a specific example of the structure OBJ.

As illustrated in Figs. 8 and 9, in the three-dimensional model D41 (OBJ1) of the bridge OBJ1, the member identification information D2 is assigned to each member constituting the bridge OBJ1. The reference structure image D42 is associated with each part of the three-dimensional model D41 (OBJ1).

In Figs. 8 and 9, although the member type and the member ID are illustrated as the member identification information D2, the member type can be omitted in a case where the member ID includes information relating to the member type.

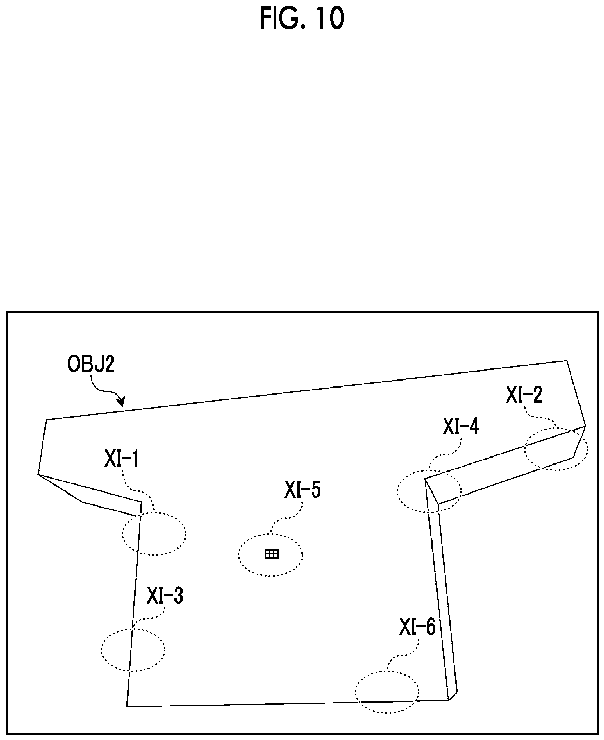

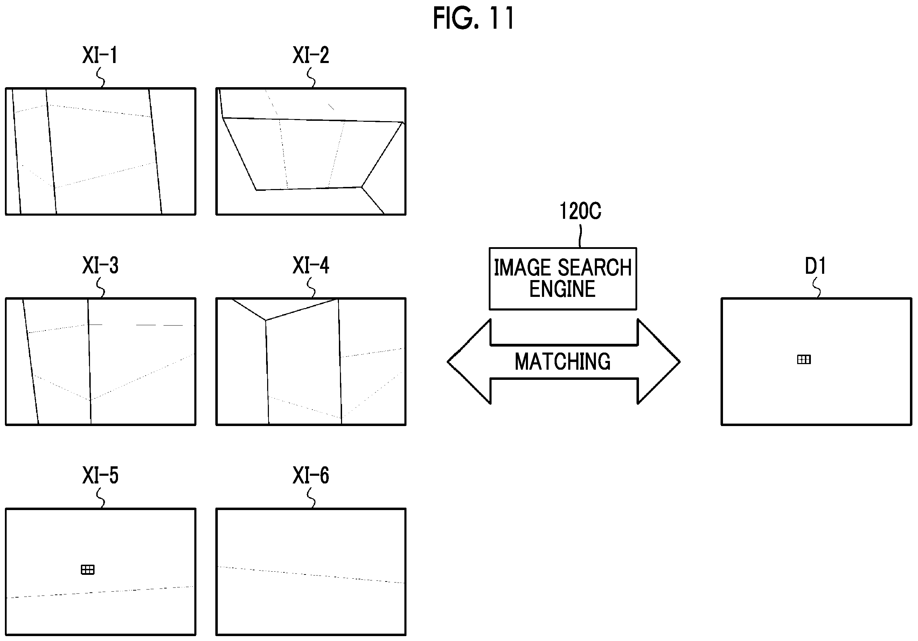

Fig. 10 is an enlarged perspective view illustrating a region X (bridge pier OBJ2) in Fig. 8, and Fig. 11 is a diagram for explaining member determination using the reference structure image D42 associated with a structure OBJ2 in Fig. 10.

Fig. 10 illustrates an entire image of the bridge pier OBJ2 which is a part of the bridge OBJ1, and Fig. 11 illustrates structure images corresponding to the regions XI-1 to XI-6 in Fig. 10, respectively. An imaging direction of the reference structure image D42 illustrated in Fig. 11 in a case of imaging may be different from that of the entire image illustrated in Fig. 10.

As illustrated in Fig. 11, the member determination unit 120 performs image recognition of the structure image D1 to be determined using the image search engine 120C, and searches for an image in which the same member appears from the reference structure image D42.

Specifically, the image search engine 120C extracts feature points from the structure image D1 to be determined, performs matching with the feature points extracted from each image of the reference structure image D42, and searches for an image in which the same member appears from the reference structure image D42. Then, the member determination unit 120 reads out the member identification information D2 of the structure model D41 associated with the image searched from the reference structure image D42 to determine the member constituting the structure OBJ appearing in the structure image D1.

As the image search engine 120C, a similar image search engine using machine learning or deep learning can be used.

The identification information assignment unit 122 acquires the determination result of the member appearing in the structure image D1 from the member determination unit 120, and assigns member identification information D2 to the structure image D1.

(Image Processing Method)

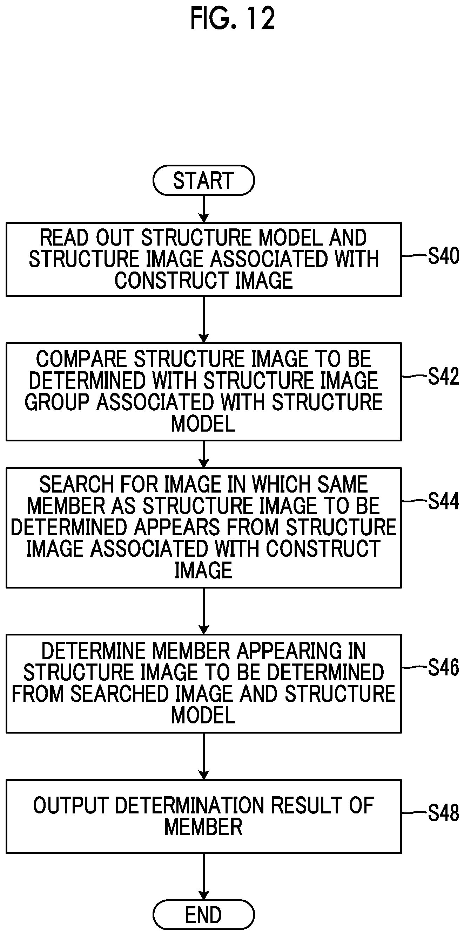

Fig. 12 is a flowchart illustrating a member determination step (Step S12 in Fig. 3) according to the third embodiment of the present invention.

First, the control unit 12 reads out the structure model D41 and the reference structure image D42 from the storage 18 or the external storage (Step S40). Here, the structure model D41 and the reference structure image D42 may be the structure model D41 and the reference structure image D42 which are created for the structure OBJ to be inspected, or may be the structure model D41 and the reference structure image D42 which are created for a structure of the same type as or similar to the structure OBJ to be inspected.

Next, the member determination unit 120 performs image recognition of the structure image D1 to be determined using the image search engine 120C, and compares the structure image D1 with the reference structure image D42 associated with the structure model D41 (Step S42). Then, the member determination unit 120 searches for an image in which the same member as the structure image D1 appears from the reference structure image D42 (Step S44).

Next, the member determination unit 120 reads out the member identification information D2 of the structure model D41 associated with the image searched from the reference structure image D42 to determine the member constituting the structure OBJ appearing in the structure image D1 (Step S46).

Then, the member determination unit 120 outputs the determination result of the member to the identification information assignment unit 122 (Step S48). Accordingly, the member identification information can be assigned to the structure image D1 (Step S14 in Fig. 3).

According to the present embodiment, the member identification information D2 can be assigned to the structure image D1 by referring to the structure model D41 and the reference structure image D42 to which the member identification information D2 has already been assigned. Accordingly, it is possible to easily classify and organize the structure images D 1.

[Fourth Embodiment]

Next, a fourth embodiment of the present invention will be described. In the following description, a description of the same configuration as that of the above-described embodiment will be omitted, and a part related to the member determination in the image processing function and the image processing method will be described.

(Image Processing Function)

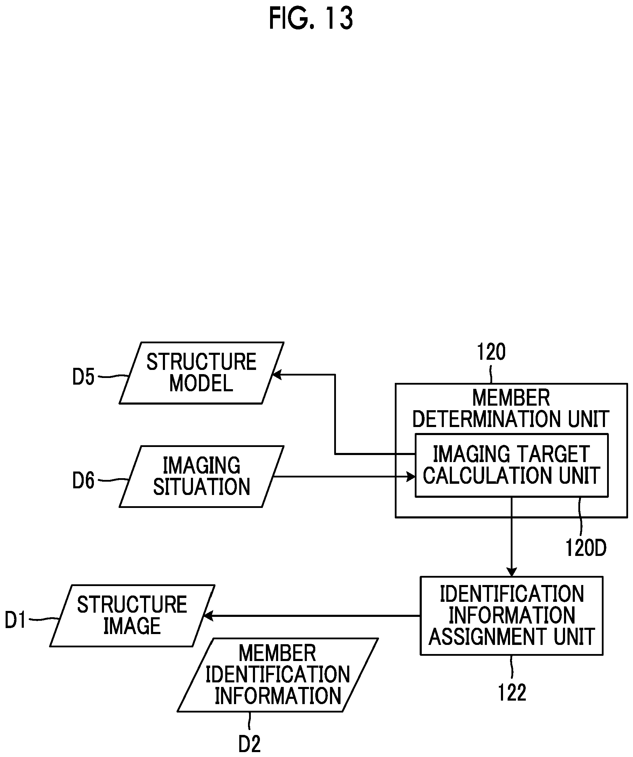

Fig. 13 is a diagram for explaining an image processing function according to the fourth embodiment of the present invention.

The member determination unit 120 according to the present embodiment comprises an imaging target calculation unit 120D. The member determination unit 120 can refer to a structure model D5 and information D6 relating to the imaging situation of the structure image D1 as the reference information.

The member determination unit 120 according to the present embodiment determines a member appearing in the structure image D1 based on a correspondence relationship between the information D6 relating to the imaging situation including the imaging position and the imaging direction of the structure image D1 and the structure model D5.

Here, the structure model D5 is data including information relating to the shape and the structure of the structure OBJ to be inspected, and is, for example, a three-dimensional model including information relating to the three-dimensional shape of the structure OBJ to be inspected. The structure model D5 may be a design data of the structure OBJ to be inspected, or may be an actual measurement data measured in advance. For example, CAD data or three-dimensional CAD data can be used as the structure model D5. In addition, in a case where the actual measurement data is used as the structure model D5, for example, point cloud data obtained by restoring the three-dimensional shape from a multi-viewpoint picture of the structure OBJ using a SfM technology can also be used.

In the structure model D5, the member identification information D2 is assigned for each member constituting the structure OBJ. The member identification information D2 is stored in the structure model D5 in association with the coordinates of the CAD data or the point cloud of the point cloud data.

The information D6 relating to the imaging situation is information relating to the imaging situation in a case of imaging the structure image D1. The information D6 relating to the imaging situation includes, for example, information indicating a position of the imaging apparatus 50 in a case of imaging (hereinafter referred to as an imaging position) and information indicating a posture of the imaging apparatus 50 in a case of imaging (hereinafter referred to as an imaging direction). For example, the information D6 relating to the imaging situation is measured by a position measurement unit including a global positioning system (GPS) device, an inertial sensor, and an altitude sensor provided in the imaging apparatus 50.

The information D6 relating to the imaging situation may be included in the structure image D1 as additional information (for example, Exif information) of the structure image D 1, or may be acquired from the imaging apparatus 50 as a separate file associated with the structure image D 1.

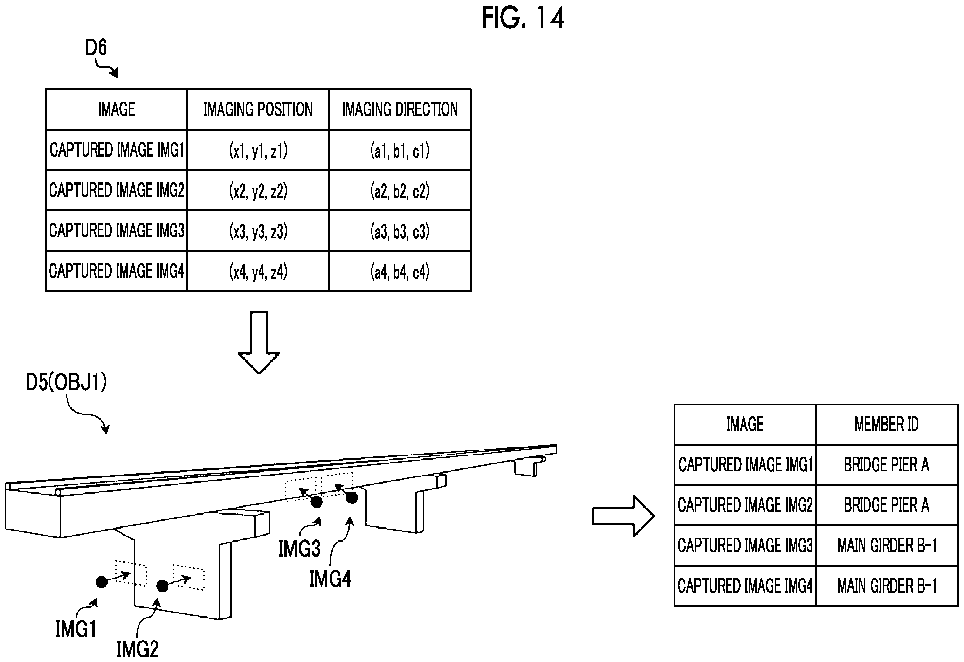

Fig. 14 is a diagram for explaining member determination using the structure model D5 and the information D6 relating to the imaging situation. In Fig. 14, an example in which the three-dimensional model D5 (OBJ1) of the bridge OBJ1 (refer to Fig. 8) is used as the structure model D5 will be described.

As illustrated in Fig. 14, the information D6 relating to the imaging situation includes information relating to the imaging position and the imaging direction.

The imaging position is represented by, for example, the xyz three-dimensional orthogonal coordinate system. The imaging position may be represented by coordinates (for example, global coordinates) specified by GPS-based latitudes and longitudes, or may be represented by local coordinates with reference to a predetermined position of the bridge OBJ1.

The imaging direction is represented by, for example, the abc three-dimensional orthogonal coordinate system set with the imaging position as an origin and with the camera provided in the imaging apparatus 50 as a reference.

In Fig. 14, in the three-dimensional model D5 (OBJ1) of the bridge OBJ1, points indicating imaging positions, arrows indicating imaging directions, and rectangles indicating imaging ranges corresponding to the respective captured images (construct images) IMG1 to IMG4 are illustrated. The imaging range will be described later.

(First Example of Member Determination)

Specifically, for example, first, an imaging direction vector extending along the imaging direction with the imaging position included in the information D6 relating to the imaging situation as a starting point is defined.

Next, in a case where the imaging direction vector is extended, the member determination unit 120 uses the imaging target calculation unit 120D to calculate a position where the imaging direction vector first comes into contact with the structure model D5.

Then, the member determination unit 120 determines a member corresponding to the position where the imaging direction vector first comes into contact with the structure model D5 as a member appearing in the structure image D1.

(Second Example of Member Determination)

In addition, as another method, the member determination unit 120 uses the imaging target calculation unit 120D to calculate an imaging distance between the imaging apparatus 50 and the structure OBJ1 in a case of imaging based on a correspondence relationship between the information relating to the imaging position and the imaging direction included in the information D6 relating to the imaging situation and the structure model D5. Specifically, the imaging distance may be a distance between the imaging apparatus 50 in a case of imaging and a focusing position on the structure OBJ1.

Next, the member determination unit 120 uses the imaging target calculation unit 120D to calculate an imaging range, which is a region appearing in the structure image D1, based on the imaging distance, the focusing position of the lens of the camera of the imaging apparatus 50 in a case of imaging, and the size of the imaging element of the camera of the imaging apparatus 50.

Specifically, in a case where the imaging distance is D, the focal length of the lens is F, and the sensor size is ((horizontal direction), (vertical direction)) = (Sx, Sy), the imaging range is represented by the following expression.

$$\text{Imaging range (horizontal direction)} = D \times Sx/F$$

$$\text{Imaging range (vertical direction)} = D \times Sy/F$$

Next, the member determination unit 120 determines a member assumed to appear in the imaging range as a member appearing in the structure image D1 from the correspondence relationship between the imaging range and the structure model D5.

In a case where it is assumed that a plurality of members appear in the imaging range, a member that is assumed to have the largest area in the imaging range is determined as a member appearing in the structure image D1. In addition, the plurality of members assumed to appear in the imaging range may be determined as members appearing in the structure image D1.

(Image Processing Method)

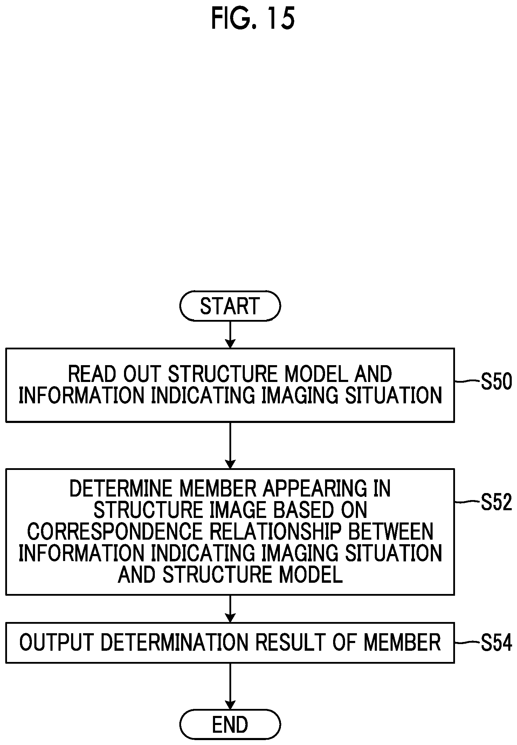

Fig. 15 is a flowchart illustrating a member determination step (Step S12 in Fig. 3) according to the fourth embodiment of the present invention.

First, the control unit 12 reads out the structure model D5 from the storage 18 or the external storage. In addition, the control unit 12 reads out the information D6 relating to the imaging situation associated with the structure image D1 (Step S50). Here, the information D6 relating to the imaging situation may be stored as additional information of the structure image D1, or may be stored in another file associated with the structure image D1.

Next, the member determination unit 120 determines a member appearing in the structure image D1 based on a correspondence relationship between the information D6 relating to the imaging situation including the imaging position and the imaging direction of the structure image D1 and the structure model D5 (Step S52).

Then, the member determination unit 120 outputs the determination result of the member to the identification information assignment unit 122 (Step S54). Accordingly, the member identification information can be assigned to the structure image D1 (Step S14 in Fig. 3).

According to the present embodiment, the member identification information D2 can be assigned to the structure image D1 by referring to the structure model D5 and the information D6 relating to the imaging situation. Accordingly, it is possible to easily classify and organize the structure images D1.

[Fifth Embodiment]

Next, a fifth embodiment of the present invention will be described. In the following description, a description of the same configuration as that of the above-described embodiment will be omitted, and a part related to the member determination in the image processing function and the image processing method will be described.

(Image Processing Function)

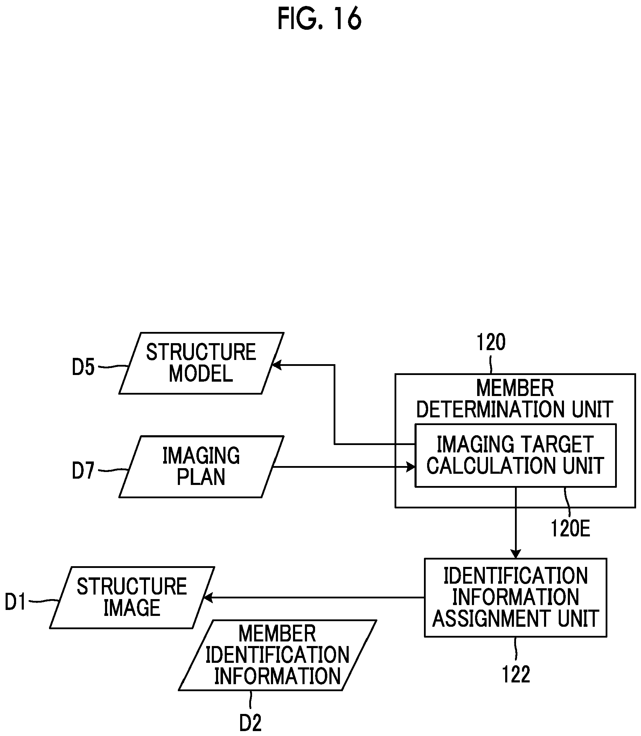

Fig. 16 is a diagram for explaining an image processing function according to the fifth embodiment of the present invention.

The member determination unit 120 according to the present embodiment comprises an imaging target calculation unit 120E. The member determination unit 120 can refer to the structure model D5 and information D7 relating to the imaging plan of the structure image D1 as reference information.

The member determination unit 120 according to the present embodiment determines a member appearing in the structure image D1 based on a correspondence relationship between the information D7 relating to the imaging plan of the structure image D1 and the structure model D5.

Here, the information D7 relating to the imaging plan is information relating to the imaging plan of the structure image D1. The information D7 relating to the imaging plan includes, for example, information indicating a correspondence relationship between information relating to the imaging order of the structures OBJ and information (for example, member ID) for specifying members to be imaged.

The information D7 relating to the imaging plan may include information indicating the imaging position of the imaging apparatus 50 in a case of imaging and information indicating the imaging direction of the imaging apparatus 50 in a case of imaging. The imaging position and the imaging direction are the same as those in the fourth embodiment, and thus the description thereof will be omitted.

The information D7 relating to the imaging plan may be included in the structure image D1 as additional information (for example, Exif information) of the structure image D1, or may be acquired from the imaging apparatus 50 or the like as a separate file associated with the structure image D1.

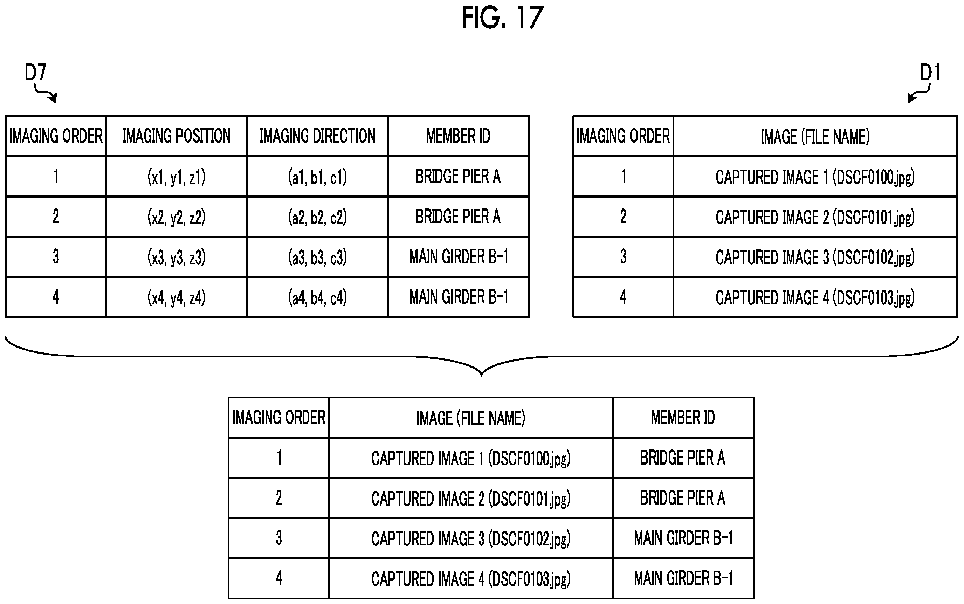

Fig. 17 is a diagram for explaining member determination using the structure model D5 and the information D7 relating to the imaging plan.

As illustrated in Fig. 17, the information D7 relating to the imaging plan includes information relating to the imaging order of the structure OBJ, information indicating the imaging position of the imaging apparatus 50 in a case of imaging, information indicating the imaging direction of the imaging apparatus 50 in a case of imaging, and the member ID.

On the other hand, the structure images D1 are stored in the storage 18 of the image processing apparatus 10, and the structure images D1 can be sorted according to the imaging order, that is, the imaging date and time.

As illustrated in Fig. 17, based on the imaging order of the information D7 relating to the imaging plan and the imaging order of the structure images D1, the member determination unit 120 associates the imaging order, the structure image D1 sorted based on the imaging order, and the member ID with each other using the imaging target calculation unit 120E. Accordingly, it is possible to specify the member appearing in each structure image D1.

(Image Processing Method)

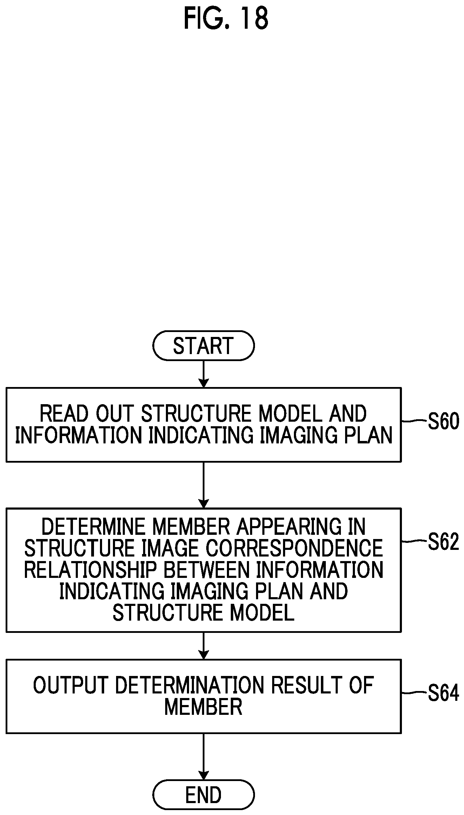

Fig. 18 is a flowchart illustrating a member determination step (Step S12 in Fig. 3) according to the fifth embodiment of the present invention.

First, the control unit 12 reads out the structure model D5 from the storage 18 or the external storage. In addition, the control unit 12 reads out the information D7 relating to the imaging plan (Step S60). Here, the information D7 relating to the imaging plan may be stored as additional information of the structure image D1, or may be stored in another file associated with the structure image D1.

Next, the member determination unit 120 determines a member appearing in the structure image D1 based on a correspondence relationship between the information D7 relating to the imaging plan of the structure image D1 and the structure model D5 (Step S62).

Then, the member determination unit 120 outputs the determination result of the member to the identification information assignment unit 122 (Step S64). Accordingly, the member identification information can be assigned to the structure image D1 (Step S14 in Fig. 3).

According to the present embodiment, the member identification information D2 can be assigned to the structure image D1 by referring to the structure model D5 and the information relating to the imaging plan. Accordingly, it is possible to easily classify and organize the structure images D1.

In the present embodiment, identification information indicating the imaging order may be assigned to the file of the structure image D1 in the image processing apparatus 10 after imaging, or the identification information may be assigned in the imaging apparatus 50 immediately after imaging.

[Additional Embodiment]

The following aspects can be added to each of the above-described embodiments.

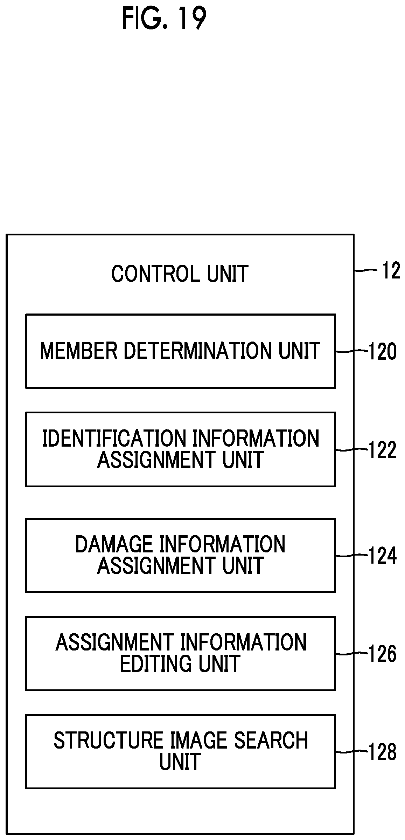

Fig. 19 is a block diagram illustrating an image processing function according to the additional embodiment.

In the example illustrated in Fig. 19, the control unit 12 can realize functions of a damage information assignment unit 124, an assignment information editing unit 126, and a structure image search unit 128.

The damage information assignment unit 124 detects damage from the structure image D1 and assigns damage information relating to the damage to the structure image D1. Here, the damage information includes, for example, information such as a position (information indicating where the damage is in the structure image D1 (for example, coordinates in the structure image D1)), a type, a size, or a degree (progress) of the damage.

As the damage information assignment unit 124, for example, it is possible to use one (for example, a classifier) created by supervised learning for learning a relationship between input and output data using teacher data having an image of damage as an input and damage information as an output. The learning algorithm of the damage information assignment unit 124 is not limited to the supervised learning, and may be unsupervised learning.

The damage information may be included in the structure image D1 as additional information (for example, Exif information) of the structure image D1, or may be a separate file associated with the structure image D1.

The assignment information editing unit 126 is a means for editing assignment information such as member identification information D2 to be assigned to the structure image D1 and damage information. The assignment information editing unit 126 can edit the assignment information on the structure image D1 in advance or afterward.

That is, in a case of editing the assignment information in advance, the assignment information editing unit 126 causes the display unit 16 to display the structure image D1 and the assignment information before assigning the assignment information to the structure image D1. Then, the assignment information editing unit 126 assigns the assignment information to the structure image D1 in response to an approval of the assignment or an input of the instruction to edit the assignment information from the input unit 14.

In addition, in a case of editing the assignment information afterward, the assignment information editing unit 126 causes the display unit 16 to display the structure image D1 to which the assignment information has been assigned and the assignment information. Then, the assignment information editing unit 126 edits the assignment information that has been assigned to the structure image D1, in response to an input of an instruction to edit the assignment information from the input unit 14.

Accordingly, the user can edit the assignment information to be assigned to the structure image D1 via the input unit 14.

The structure image search unit 128 receives an input of a search key from the input unit 14, searches for the structure image D1 according to the search key, and causes the display unit 16 to display the structure image D1. Here, as the search key, the member identification information D2, the damage information, or the like can be used as the assignment information.

The image processing apparatus 10 according to each of the above-described embodiments can add at least one function of the damage information assignment unit 124, the assignment information editing unit 126, or the structure image search unit 128 according to the additional embodiment.

[Modification Example 1]

In each of the above-described embodiments, an example in which the image processing apparatus 10 processes the image acquired from the imaging apparatus 50 has been described, but the present invention is not limited thereto. For example, an imaging apparatus for capturing an image of a structure can have a configuration including the image processing apparatus and the image processing function according to each of the above-described embodiments.

(Imaging Apparatus)

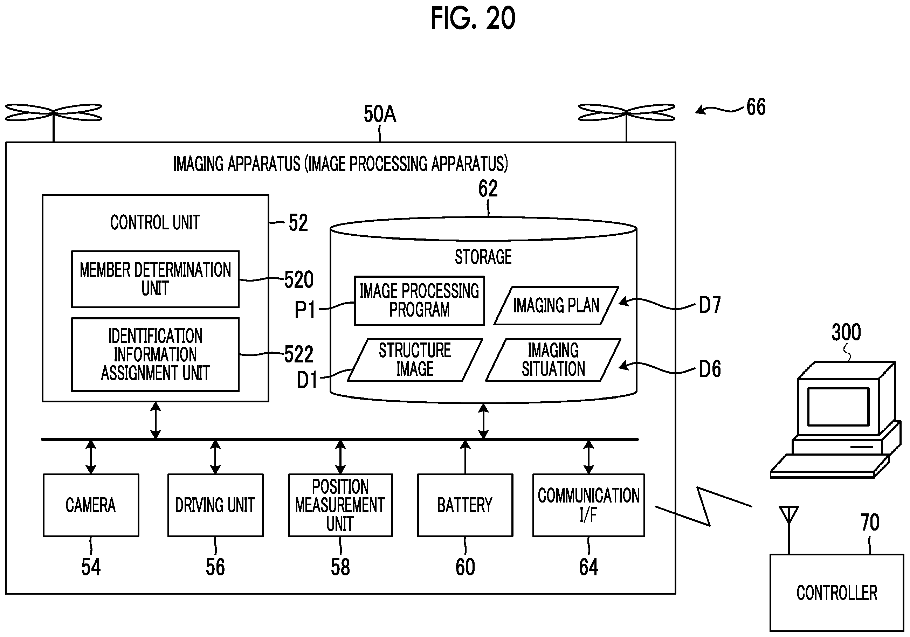

Fig. 20 is a block diagram illustrating an imaging apparatus (image processing apparatus) having an image processing function according to Modification Example 1.

An imaging apparatus 50A according Modification Example 1 is, for example, an unmanned aerial vehicle such as a multicopter or a drone in which the camera 54 is mounted. The imaging apparatus 50A can wirelessly communicate with a controller 70, and performs flight and imaging according to a control signal from the controller 70.

The imaging apparatus 50A according to Modification Example 1 includes the image processing function according to each of the above-described embodiments and is an example of an image processing apparatus according to the present invention.

As illustrated in Fig. 20, the imaging apparatus 50A according to the present embodiment includes a control unit 52, a camera 54, a driving unit 56, a position measurement unit 58, a battery 60, a storage 62, and a communication interface (communication I/F) 64.

The control unit 52 includes a processor (for example, a CPU or a GPU) that controls the operation of each unit of the imaging apparatus 50A and a RAM that is used as a work region for various kinds of calculation.

A processor of the control unit 52 can realize the functions of a member determination unit 520 and an identification information assignment unit 522 by reading out an image processing program P1 from the storage 62 and executing the image processing program P1. The member determination unit 520 and the identification information assignment unit 522 are respectively the same as the member determination unit 120 and the identification information assignment unit 122 in each of the above-described embodiments, and thus the description thereof will be omitted.

The camera (imaging unit) 54 is for capturing the structure image D1 of the structure OBJ to be inspected, and includes, for example, a CCD camera or an infrared camera.

The driving unit 56 includes a motor for rotating a propulsive device such as a propeller 66 attached to the imaging apparatus 50A, and an electric speed controller (ESC) for controlling the rotation speed of the motor. The driving unit 56 can obtain uplift force and propulsive force for causing the imaging apparatus 50A to fly by rotating the propeller 66 using the motor.

The position measurement unit 58 is a device that acquires position information indicating a position of the imaging apparatus 50A and posture information indicating a posture thereof. The position measurement unit 58 comprises, for example, a GPS device, an inertial sensor, and an altitude sensor. The GPS device three-dimensionally measures the position of the imaging apparatus 50A based on a signal emitted from a GPS satellite, and acquires position information (for example, latitude and longitude). The inertial sensor comprises, for example, a three axis acceleration sensor or a three axis gyro sensor, and acquires information (for example, speed information, acceleration information, and posture information) indicating a flight state of the imaging apparatus 50A. The altitude sensor comprises, for example, altimeters such as a pneumatic type, a GPS type, a laser type, or a radar type. The position information by the GPS, the information indicating the flight state, and the information relating to the altitude are stored in the storage 62 as the information D6 indicating the imaging situation.

The battery 60 supplies electric power to each unit of the imaging apparatus 50A. As the battery 60, a primary battery or a secondary battery can be used, and for example, a lithium polymer battery can be used.

The storage 62 stores a control program, an image processing program P1, and the like for various calculations, and various kinds of data including the structure image D1 (for example, a visible light image, an infrared image, or the like) obtained by imaging the structure OBJ to be inspected. In addition, the storage 62 stores the information D7 indicating the imaging plan and the information D6 indicating the imaging situation. As the storage 62, for example, a device including a flash memory such as an eMMC or an SSD can be used.

The communication I/F 64 is a means for performing wireless communication with the controller 70. Here, a method of the wireless communication is not particularly limited, but it is possible to use the wireless communication in the 2.4 GHz band or the 5.7 GHz band for the communication with the controller 70. In addition, in a case of performing the communication with a user terminal 300, a wireless LAN or the like can be used. A method of communication is not limited to wireless communication, and wired communication can be used.

The controller 70 may be a dedicated proportional control system transmitter, or may be a terminal (for example, a tablet terminal) in which a control application is introduced.

The structure image D1 classified and organized in the imaging apparatus 50A can be downloaded to the user terminal 300 (for example, a general-purpose computer such as a personal computer or a workstation, a tablet terminal, or the like) and can be viewed. Accordingly, it is possible to perform various diagnoses using the structure image D1 and inspection work such as creation of a report on inspection and diagnosis results. It is also possible to use the controller 70 and the user terminal 300 in common.

According to Modification Example 1, it is possible to easily perform the inspection work of the structure OBJ using the structure image D1 by downloading the structure image D1 classified and organized in the imaging apparatus 50A to the user terminal 300.

(Combination with Fifth Embodiment)

A case where the member determination according to the fifth embodiment is performed in the imaging apparatus 50A according to Modification Example 1 will be described.

As described above, in the fifth embodiment, the member determination unit 520 of the control unit 52 determines a member appearing in the structure image D1 based on a correspondence relationship between the information D7 relating to the imaging plan of the structure image D1 and the structure model D5.

In this case, in order to image the structure image D1 according to the information D7 relating to the imaging plan, it is preferable that the control unit 52 performs control to perform imaging after determining that the detection result of the imaging position and the imaging direction by the position measurement unit 58 has reached the information D7 relating to the imaging plan, that is, at a stage where the detection result of the imaging position and the imaging direction by the position measurement unit 58 matches the information D7 relating to the imaging plan.

As described above, by performing the imaging control, it is possible to increase the accuracy of the member determination using the information D7 relating to the imaging plan.

In the present embodiment, an example in which the camera 54 is mounted in the unmanned aerial vehicle has been described, but the present invention is not limited thereto. For example, any moving object such as a vehicle or a robot equipped with a camera may be used. In a case where the operator gets on the moving object and operates it, the controller 70 is not necessary. In addition, it is also possible to use a camera which is not mounted on the moving object.

[Modification Example 2]

In addition, unlike Modification Example 1, a server on the cloud (hereinafter, referred to as a cloud server) may comprise the image processing function according to each of the above-described embodiments and may be configured to upload the structure image D1 captured by the imaging apparatus 50 to the cloud server.

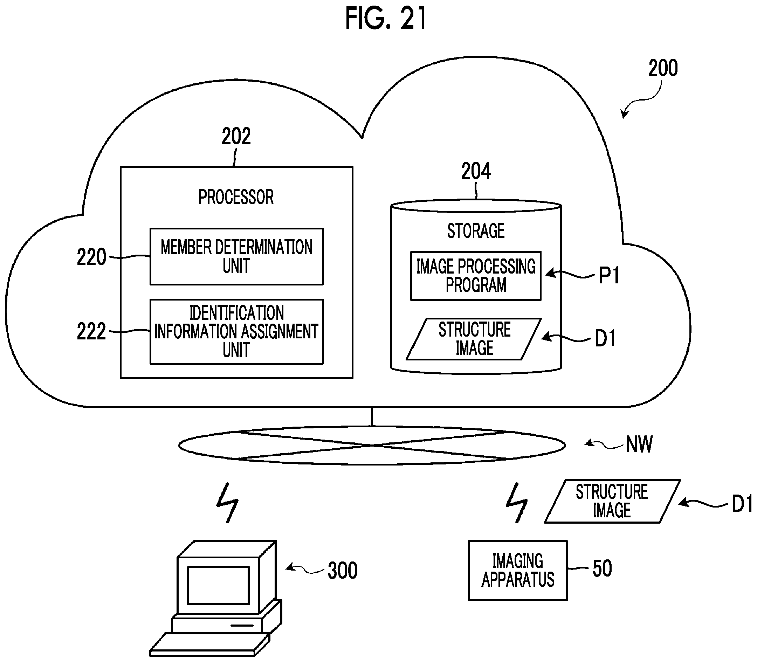

Fig. 21 is a block diagram illustrating the cloud server comprising the image processing function according to Modification Example 2.

A cloud server 200 according to Modification Example 2 is a server that can be used via a network NW such as the Internet. The cloud server 200 can communicate with the imaging apparatus 50 and the user terminal 300 (for example, a general-purpose computer such as a personal computer or a workstation, a tablet terminal, or the like) via wired communication or wireless communication.

The cloud server 200 according to Modification Example 2 includes the image processing function according to each of the above-described embodiments, and is an example of the image processing apparatus according to the present invention.

The structure image D1 captured by the imaging apparatus 50 may be uploaded to the cloud server 200 via, for example, the user terminal 300 or other external devices. In this case, the communication connection between the cloud server 200 and the imaging apparatus 50 is not necessary.

As illustrated in Fig. 21, a processor 202 of the cloud server 200 can realize functions of a member determination unit 220 and an identification information assignment unit 222 by reading out an image processing program P1 from a storage 204 and executing the image processing program P1. The member determination unit 220 and the identification information assignment unit 222 are respectively the same as the member determination unit 120 and the identification information assignment unit 122 in each of the above-described embodiments, and thus the description thereof will be omitted.

The storage 204 stores a control program, an image processing program P1, and the like for various calculations, and various kinds of data including the structure image D1 (for example, a visible light image, an infrared image, or the like) obtained by imaging the structure OBJ to be inspected. In addition, the storage 204 stores the information D7 indicating the imaging plan and the information D6 indicating the imaging situation. As the storage 204, for example, a device including a magnetic disk such as an HDD, a device including a flash memory such as an eMMC or an SSD can be used.

The structure image D1 classified and organized in the cloud server 200 can be downloaded to the user terminal 300 and can be viewed. Accordingly, it is possible to perform various diagnoses using the structure image D1 and inspection work such as creation of a report on inspection and diagnosis results.

According to Modification Example 2, it is possible to easily perform the inspection work of the structure OBJ using the structure image D1 by downloading the structure image D1 classified and organized in the cloud server 200 to the user terminal 300.

[Modification Example 3]

In addition, it is also possible to provide the image processing functions according to the above-described embodiments in the form of software as a service (SaaS) instead of the form of infrastructure as a service (IaaS) as in Modification Example 2.

In this case, first, the user terminal 300 acquires the structure image D1 from the imaging apparatus 50. Then, the user terminal 300 classifies and organizes the structure images D1 by using the image processing function for classifying and organizing images provided via the network NW from the cloud server 200 installed by an application service provider (ASP) or the like.

Here, in a case of performing the image processing function provided from the cloud server 200, the structure image D1 may be uploaded to the cloud server 200, or the image processing function may be applied while being stored in a storage of the user terminal 300.

According to Modification Example 3, it is possible to easily perform the inspection work of the structure OBJ using the structure image D1 by classifying and organizing the structure images D1 using the image processing function provided from the cloud server 200.

In Modification Example 3, the imaging apparatus 50 may call a function for classifying and organizing images provided by the cloud server 200, and may classify and organize images in the storage of the imaging apparatus 50.

In addition, the configuration according to the additional embodiment illustrated in Fig. 19 can also be added to the imaging apparatus 50A and the cloud server 200 according to Modification Examples 1 to 3.

Explanation of References

> 10: image processing apparatus
> 12: control unit
> 14: input unit
> 16: display unit
> 18: storage
> 20: communication I/F
> 120: member determination unit
> 120A: member determination AI
> 120B
> 120C: image search engine
> 120D
> 120E: imaging target calculation unit
> 122: identification information assignment unit
> 124: damage information assignment unit
> 126: assignment information editing unit
> 128: structure image search unit
> 50,50A: imaging apparatus
> 52: control unit
> 54: camera
> 56: driving unit
> 58: position measurement unit
> 60: battery
> 62: storage
> 64: communication I/F
> 66: propeller
> 520: member determination unit
> 522: identification information assignment unit
> 70: controller
> 200: cloud server
> 202: processor
> 204: storage
> 220: member determination unit
> 222: identification information assignment unit
> 300: user terminal

**Claims**

1. An image processing apparatus comprising:

   a member determination unit that determines a member appearing in a structure image to be determined, which is obtained by imaging a structure; and
   an identification information assignment unit that assigns member identification information indicating the member determined by the member determination unit to the structure image to be determined.

2. The image processing apparatus according to claim 1, wherein the member determination unit performs image recognition of the structure image to be determined, and determines the member appearing in the structure image to be determined based on a result of the image recognition.

3. The image processing apparatus according to claim 2, wherein the member determination unit includes member determination AI that has been trained for determination of a member constituting the structure, and determines the member appearing in the structure image to be determined using the member determination AI.

4. The image processing apparatus according to claim 2, wherein the member determination unit detects a member identifier assigned to each member constituting the structure from the structure image to be determined, and determines the member appearing in the structure image to be determined using the member identifier.

5. The image processing apparatus according to claim 2, wherein the member determination unit performs image recognition of an assignment-completed structure image to which the member identification information has already been assigned and the structure image to be determined, and determines the member appearing in the structure image to be determined based on a result of the image recognition.

6. The image processing apparatus according to claim 2,

wherein the member determination unit
acquires a structure model that includes information indicating a structure of the structure and that is associated with the member identification information of the structure and a reference structure image that is associated with the structure model,
performs image recognition of the reference structure image and the structure image to be determined and searches for the reference structure image in which the same member as the member appearing in the structure image to be determined appears based on a result of the image recognition, and
determines the member appearing in the structure image to be determined from a correspondence relationship between the reference structure image in which the same member as the member appearing in the structure image to be determined appears and the structure model.

7. The image processing apparatus according to claim 1, wherein the member determination unit acquires reference information for determining the member appearing in the structure image to be determined, and determines the member appearing in the structure image to be determined based on the reference information.

8. The image processing apparatus according to claim 7,

wherein the reference information includes a structure model including information indicating a structure of the structure, and information relating to an imaging situation including information on an imaging position and an imaging direction in a case of imaging of the structure image to be determined, and
the member determination unit determines the member appearing in the structure image to be determined based on a correspondence relationship between the structure model and the information relating to the imaging situation.

9. The image processing apparatus according to claim 7,

wherein the reference information includes information relating to an imaging plan of the structure including information indicating a correspondence relationship between an imaging order of the structure image to be determined and a member constituting the structure, and
the member determination unit determines the member appearing in the structure image to be determined based on a correspondence relationship between the information relating to the imaging plan and the structure image to be determined.

10. The image processing apparatus according to claim 9,

wherein the information relating to the imaging plan includes information indicating an imaging position and an imaging direction in a case of imaging the structure, and
the image processing apparatus further comprises:

an imaging unit for imaging the structure;
a position measurement unit that measures an imaging position and an imaging direction of the imaging unit; and
a control unit that performs control such that the imaging position and the imaging direction of the imaging unit match the information indicating the imaging position and the imaging direction included in the information relating to the imaging plan.

11. The image processing apparatus according to any one of claims 1 to 10, wherein in a case where a plurality of members appear in the structure image to be determined, the identification information assignment unit assigns member identification information relating to the plurality of members to the structure image to be determined.

12. The image processing apparatus according to any one of claims 1 to 11, further comprising a damage information assignment unit that detects damage from the structure image and that assigns information relating to the damage to the structure image.

13. The image processing apparatus according to any one of claims 1 to 12, further comprising an assignment information editing unit for editing assignment information assigned to the structure image.

14. The image processing apparatus according to any one of claims 1 to 13, further comprising a structure image search unit that searches for the structure image based on assignment information assigned to the structure image.

15. An image processing method comprising:

a step of determining a member appearing in a structure image to be determined, which is obtained by imaging a structure; and
a step of assigning member identification information indicating a member which is determined as the member appearing in the structure image to be determined to the structure image to be determined.

16. An image processing program for causing a computer to realize:

a member determination function of determining a member appearing in a structure image to be determined, which is obtained by imaging a structure; and
an identification information assignment function of assigning member identification information indicating the member determined by the member determination function to the structure image to be determined.

FIG. 1

EP 4 411 069 A1

# FIG. 2

# FIG. 3

START

READ OUT STRUCTURE IMAGE — S10

DETERMINE MEMBER
APPEARING IN STRUCTURE
IMAGE — S12

ASSIGN MEMBER
IDENTIFICATION INFORMATION
TO STRUCTURE IMAGE — S14

S16
HAS
DETERMINATION
OF ALL STRUCTURE IMAGES
BEEN COMPLETED?

No

Yes

END

# FIG. 4

```
                    ( START )
                        │
                        ▼
    ┌─────────────────────────────────────┐
    │  DETERMINE MEMBER APPEARING IN       │── S20
    │       STRUCTURE IMAGE TO BE          │
    │     DETERMINED USING MEMBER          │
    │         DETERMINATION AI             │
    └─────────────────────────────────────┘
                        │
                        ▼
    ┌─────────────────────────────────────┐
    │   OUTPUT DETERMINATION RESULT        │── S22
    │           OF MEMBER                  │
    └─────────────────────────────────────┘
                        │
                        ▼
                    (  END  )
```

# FIG. 5

D3

ASSIGNMENT-
COMPLETED
STRUCTURE IMAGE

120

MEMBER
DETERMINATION UNIT

IMAGE SEARCH
ENGINE

120B

D1

STRUCTURE
IMAGE

IDENTIFICATION
INFORMATION
ASSIGNMENT UNIT

122

MEMBER
IDENTIFICATION
INFORMATION

D2

# FIG. 6

```
        ( START )
            │
            ▼
┌───────────────────────┐
│   READ OUT ASSIGNED   │──S30
│    STRUCTURE IMAGE    │
└───────────────────────┘
            │
            ▼
┌───────────────────────┐
│ COMPARE STRUCTURE IMAGE│──S32
│   TO BE DETERMINED AND │
│ ASSIGNED STRUCTURE IMAGE│
└───────────────────────┘
            │
            ▼
┌───────────────────────┐
│ SEARCH FOR IMAGE IN WHICH│──S34
│ SAME MEMBER AS STRUCTURE │
│  IMAGE TO BE DETERMINED  │
│   APPEARS FROM ASSIGNED  │
│      STRUCTURE IMAGE     │
└───────────────────────┘
            │
            ▼
┌───────────────────────┐
│   DETERMINE MEMBER    │──S36
│  APPEARING IN STRUCTURE│
│  IMAGE TO BE DETERMINE │
└───────────────────────┘
            │
            ▼
┌───────────────────────┐
│ OUTPUT DETERMINATION  │──S38
│   RESULT OF MEMBER    │
└───────────────────────┘
            │
            ▼
         ( END )
```

# FIG. 7

D41 — STRUCTURE MODEL

D42 — STRUCTURE IMAGE

D1 — STRUCTURE IMAGE

120

MEMBER DETERMINATION UNIT

IMAGE SEARCH ENGINE — 120C

IDENTIFICATION INFORMATION ASSIGNMENT UNIT

122

MEMBER IDENTIFICATION INFORMATION

D2

## FIG. 8

D41(OBJ1)

IX

X

MEMBER IDENTIFICATION
INFORMATION D2

MEMBER TYPE: MAIN GIRDER
MEMBER ID: MAIN GIRDER A-1

MEMBER IDENTIFICATION
INFORMATION D2

MEMBER TYPE: BRIDGE PIER
MEMBER ID: BRIDGE PIER A

MEMBER IDENTIFICATION
INFORMATION D2

MEMBER TYPE: MAIN GIRDER
MEMBER ID: MAIN GIRDER B-1

MEMBER IDENTIFICATION
INFORMATION D2

MEMBER TYPE: BRIDGE PIER
MEMBER ID: BRIDGE PIER B

MEMBER IDENTIFICATION
INFORMATION D2

MEMBER TYPE: BRIDGE PIER
MEMBER ID: BRIDGE PIER C

EP 4 411 069 A1

# FIG. 9

MEMBER IDENTIFICATION
INFORMATION D2

MEMBER TYPE: DECK SLAB
MEMBER ID: DECK SLAB A-1

MEMBER IDENTIFICATION
INFORMATION D2

MEMBER TYPE: MAIN GIRDER
MEMBER ID: MAIN GIRDER A-1

MEMBER IDENTIFICATION
INFORMATION D2

MEMBER TYPE: DECK SLAB
MEMBER ID: DECK SLAB A-2

MEMBER IDENTIFICATION
INFORMATION D2

MEMBER TYPE: CROSS BEAM
MEMBER ID: CROSS BEAM A-2

MEMBER IDENTIFICATION
INFORMATION D2

MEMBER TYPE: CROSS BEAM
MEMBER ID: CROSS BEAM A-3

MEMBER IDENTIFICATION
INFORMATION D2

MEMBER TYPE: CROSS BEAM
MEMBER ID: CROSS BEAM A-1

MEMBER IDENTIFICATION
INFORMATION D2

MEMBER TYPE: MAIN GIRDER
MEMBER ID: MAIN GIRDER A-2

# FIG. 10

# FIG. 11

XI-1

XI-2

XI-3

XI-4

120C

IMAGE SEARCH ENGINE

D1

MATCHING

XI-5

XI-6

# FIG. 12

START

READ OUT STRUCTURE MODEL AND STRUCTURE IMAGE ASSOCIATED WITH CONSTRUCT IMAGE —S40

COMPARE STRUCTURE IMAGE TO BE DETERMINED WITH STRUCTURE IMAGE GROUP ASSOCIATED WITH STRUCTURE MODEL —S42

SEARCH FOR IMAGE IN WHICH SAME MEMBER AS STRUCTURE IMAGE TO BE DETERMINED APPEARS FROM STRUCTURE IMAGE ASSOCIATED WITH CONSTRUCT IMAGE —S44

DETERMINE MEMBER APPEARING IN STRUCTURE IMAGE TO BE DETERMINED FROM SEARCHED IMAGE AND STRUCTURE MODEL —S46

OUTPUT DETERMINATION RESULT OF MEMBER —S48

END

# FIG. 13

D5 — STRUCTURE MODEL

D6 — IMAGING SITUATION

120

MEMBER DETERMINATION UNIT

IMAGING TARGET CALCULATION UNIT

120D

IDENTIFICATION INFORMATION ASSIGNMENT UNIT

122

D1 — STRUCTURE IMAGE

MEMBER IDENTIFICATION INFORMATION

D2

# FIG. 14

D6

| IMAGE | IMAGING POSITION | IMAGING DIRECTION |
|---|---|---|
| CAPTURED IMAGE IMG1 | (x1, y1, z1) | (a1, b1, c1) |
| CAPTURED IMAGE IMG2 | (x2, y2, z2) | (a2, b2, c2) |
| CAPTURED IMAGE IMG3 | (x3, y3, z3) | (a3, b3, c3) |
| CAPTURED IMAGE IMG4 | (x4, y4, z4) | (a4, b4, c4) |

D5(OBJ1)

IMG3
IMG4
IMG1
IMG2

| IMAGE | MEMBER ID |
|---|---|
| CAPTURED IMAGE IMG1 | BRIDGE PIER A |
| CAPTURED IMAGE IMG2 | BRIDGE PIER A |
| CAPTURED IMAGE IMG3 | MAIN GIRDER B-1 |
| CAPTURED IMAGE IMG4 | MAIN GIRDER B-1 |

EP 4 411 069 A1

# FIG. 15

```
        ( START )
            │
            ▼
┌───────────────────────────────────┐
│      READ OUT STRUCTURE MODEL AND  │──S50
│ INFORMATION INDICATING IMAGING SITUATION │
└───────────────────────────────────┘
            │
            ▼
┌───────────────────────────────────┐
│    DETERMINE MEMBER APPEARING IN   │
│      STRUCTURE IMAGE BASED ON      │──S52
│ CORRESPONDENCE RELATIONSHIP BETWEEN │
│ INFORMATION INDICATING IMAGING SITUATION │
│        AND STRUCTURE MODEL          │
└───────────────────────────────────┘
            │
            ▼
┌───────────────────────────────────┐
│ OUTPUT DETERMINATION RESULT OF MEMBER │──S54
└───────────────────────────────────┘
            │
            ▼
         ( END )
```

# FIG. 16

D5 — STRUCTURE MODEL

D7 — IMAGING PLAN

120

MEMBER DETERMINATION UNIT

IMAGING TARGET CALCULATION UNIT

120E

D1 — STRUCTURE IMAGE

MEMBER IDENTIFICATION INFORMATION

D2

IDENTIFICATION INFORMATION ASSIGNMENT UNIT

122

## FIG. 17

D7

| IMAGING ORDER | IMAGING POSITION | IMAGING DIRECTION | MEMBER ID |
|---|---|---|---|
| 1 | (x1, y1, z1) | (a1, b1, c1) | BRIDGE PIER A |
| 2 | (x2, y2, z2) | (a2, b2, c2) | BRIDGE PIER A |
| 3 | (x3, y3, z3) | (a3, b3, c3) | MAIN GIRDER B-1 |
| 4 | (x4, y4, z4) | (a4, b4, c4) | MAIN GIRDER B-1 |

D1

| IMAGING ORDER | IMAGE (FILE NAME) |
|---|---|
| 1 | CAPTURED IMAGE 1 (DSCF0100.jpg) |
| 2 | CAPTURED IMAGE 2 (DSCF0101.jpg) |
| 3 | CAPTURED IMAGE 3 (DSCF0102.jpg) |
| 4 | CAPTURED IMAGE 4 (DSCF0103.jpg) |

| IMAGING ORDER | IMAGE (FILE NAME) | MEMBER ID |
|---|---|---|
| 1 | CAPTURED IMAGE 1 (DSCF0100.jpg) | BRIDGE PIER A |
| 2 | CAPTURED IMAGE 2 (DSCF0101.jpg) | BRIDGE PIER A |
| 3 | CAPTURED IMAGE 3 (DSCF0102.jpg) | MAIN GIRDER B-1 |
| 4 | CAPTURED IMAGE 4 (DSCF0103.jpg) | MAIN GIRDER B-1 |

EP 4 411 069 A1

# FIG. 18

START

READ OUT STRUCTURE MODEL AND INFORMATION INDICATING IMAGING PLAN — S60

DETERMINE MEMBER APPEARING IN STRUCTURE IMAGE CORRESPONDENCE RELATIONSHIP BETWEEN INFORMATION INDICATING IMAGING PLAN AND STRUCTURE MODEL — S62

OUTPUT DETERMINATION RESULT OF MEMBER — S64

END

# FIG. 19

CONTROL UNIT ──12

MEMBER DETERMINATION UNIT ──120

IDENTIFICATION INFORMATION
ASSIGNMENT UNIT ──122

DAMAGE INFORMATION
ASSIGNMENT UNIT ──124

ASSIGNMENT INFORMATION
EDITING UNIT ──126

STRUCTURE IMAGE SEARCH
UNIT ──128

## FIG. 20

IMAGING APPARATUS (IMAGE PROCESSING APPARATUS) — 50A

CONTROL UNIT — 52

MEMBER DETERMINATION UNIT — 520

IDENTIFICATION INFORMATION ASSIGNMENT UNIT — 522

STORAGE — 62

IMAGE PROCESSING PROGRAM — P1

IMAGING PLAN — D7

STRUCTURE IMAGE — D1

IMAGING SITUATION — D6

CAMERA — 54

DRIVING UNIT — 56

POSITION MEASUREMENT UNIT — 58

BATTERY — 60

COMMUNICATION I/F — 64

66

300

CONTROLLER — 70

EP 4 411 069 A1

FIG. 21

EP 4 411 069 A1

## INTERNATIONAL SEARCH REPORT

| International application No. |
| --- |
| **PCT/JP2022/031749** |

| | |
| --- | --- |
| **A. CLASSIFICATION OF SUBJECT MATTER** | |

*E01D 22/00*(2006.01)i; *G06T 7/00*(2017.01)i
FI:  G06T7/00 350B; E01D22/00 A

According to International Patent Classification (IPC) or to both national classification and IPC

**B. FIELDS SEARCHED**

Minimum documentation searched (classification system followed by classification symbols)

G06F30/00-30/398, G06T7/00-7/90

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-140445 A (TOPCON CORP) 16 September 2021 (2021-09-16) paragraphs [0044]-[0045], [0049], [0051], [0054]-[0055], [0058], [0060]-[0062], [0071], [0080], [0091], [0212]-[0214], [0217], [0220], fig. 1, 11 | 1, 15-16 |
| Y | | 2-5, 7, 11-14 |
| A | | 6, 8-10 |
| Y | JP 2019-175015 A (TAKENAKA KOMUTEN CO) 10 October 2019 (2019-10-10) paragraphs [0018]-[0019], [0022]-[0023], [0027], [0032], [0050], fig. 2, 6 | 2-5, 12 |
| Y | WO 2017/119202 A1 (FUJIFILM CORPORATION) 13 July 2017 (2017-07-13) paragraphs [0051]-[0052], [0058], [0061], [0132], fig. 5, 20 | 4, 7, 11 |
| Y | JP 2020-035094 A (OLYMPUS CORP) 05 March 2020 (2020-03-05) paragraphs [0006]-[0008], [0018] | 13 |
| Y | CN 112241565 A (WANYI TECHNOLOGY CO., LTD.) 19 January 2021 (2021-01-19) paragraphs [0001], [0050]-[0052], [0060], fig. 2 | 14 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 September 2022** | **27 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/031749**

| Patent document cited in search report | | | Publication date (day/month/year) | Patent family member(s) | Publication date (day/month/year) |
|---|---|---|---|---|---|
| JP | 2021-140445 | A | 16 September 2021 | US 2021/0279960 A1 paragraphs [0066]-[0067], [0071], [0073], [0076]-[0077], [0080], [0082]-[0084], [0093], [0102], [0113], [0234]-[0236], [0239], [0242], fig. 1, 11 | |
| JP | 2019-175015 | A | 10 October 2019 | (Family: none) | |
| WO | 2017/119202 | A1 | 13 July 2017 | US 2018/0300868 A1 paragraphs [0070]-[0071], [0077], [0080], [0157], fig. 5, 20 | |
| JP | 2020-035094 | A | 05 March 2020 | CN 110910340 A | |
| CN | 112241565 | A | 19 January 2021 | (Family: none) | |

Form PCT/ISA/210 (patent family annex) (January 2015)

**REFERENCES CITED IN THE DESCRIPTION**

**Patent documents cited in the description**

- WO 2015163106 A